(19) Europäisches Patentamt

European Patent Office

Office européen des brevets

(11) Veröffentlichungsnummer: **0 510 471 A1**

## (12) EUROPÄISCHE PATENTANMELDUNG

(21) Anmeldenummer: **92106337.6**

(22) Anmeldetag: **13.04.92**

(51) Int. Cl.5: **F01K 17/02**, F01K 7/34

(30) Priorität: **22.04.91 DE 4113071**

(43) Veröffentlichungstag der Anmeldung:
**28.10.92 Patentblatt 92/44**

(84) Benannte Vertragsstaaten:
**AT FR GB**

(71) Anmelder: **Rasche, Klaus**
**Bornaische Strasse 65**
**O-7030 Leipzig(DE)**

(72) Erfinder: **Rasche, Klaus**
**Bornaische Strasse 65**
**O-7030 Leipzig(DE)**

(74) Vertreter: **Köhler, Manfred**
**Hainstrasse 17/19, Aufgang E**
**O-7010 Leipzig(DE)**

(54) **Verfahren zur Wärmeversorgung.**

(57) Die Erfindung betrifft ein Verfahren zur Wärmeversorgung von Versorgungsgebieten, wobei die zwei Energieträger Elektroenergie und Wärme in einem Erzeugerwerk gemeinsam über den bekannten Prozeß der Wärme-Kraft-Kopplung erzeugt und im Versorgungsgebiet gemeinsam zur Deckung des Wärmebedarfs eingesetzt werden.
Durch eine Auslegung des Heizwerkes mit Gegendruckturbinen mit einem Kopplfaktor 1 wird eine der Charakteristik des Wärmeverbrauches proportionale Elektroenergie erzeugt, die damit wieder für Heizungszwecke verwendet werden kann. Durch eine systemeigene Regelung ist es möglich, die Proportionen der Erzeugung von Elektroenergie und Fernwärme zu verändern und dem Verbrauch jeweils anzupassen. Damit wird dieses Verfahren unabhängig von anderen Systemen, z. B. von dem elektrischen Verbundnetz und kann autark betrieben werden. Die Elektroenergie wird dann zweckmäßig auch über ein eigenes Heizstromverteilernetz zum Verbraucher transportiert.

EP 0 510 471 A1

Die Erfindung betrifft ein Verfahren zur autarken Wärmeversorgung, bei welchem die zwei Energieträger Elektroenergie und Fernwärme in einem Erzeugerwerk gemeinsam über den bekannten Prozeß der Wärme-Kraft-Kopplung erzeugt und im Versorgungsgebiet wiederum gemeinsam zur Deckung dem Wärmebedarfes eingesetzt werden. Dieses Verfahren ist dadurch gekennzeichnet, daß die Elektroenergieerzeugung mittels bekannter Gegendruckturbinen oder Entnahme-Gegendruckturbinen erfolgt, wobei diese Maschinen auch bei niedrigen Benutzungsstunden für einen Koppelfaktor 1 ausgelegt werden. Dadurch wird eine der Belastungscharakteristik des Wärmeleistungsbedarfes proportionale elektrische Leistung erzeugt. Ein Vorteil dieses Verfahrens besteht darin, daß die so erzeugte elektrische Leistung wieder zur Deckung des Wärmebedarfes genutzt wird.

Der bekannte Stand der Technik stellt sich in der DD-PS 110 104 dar.

In dieser Patentschrift wurde bereits ein kombiniertes System der Wärmeversorgung beschrieben, welches dadurch gekennzeichnet war, daß die zwei Energieträger Elektroenergie und Wärme gemeinsam in einem Heizwerk mit Gegendruckturbinen mit dem Koppelfaktor 1,0 erzeugt und gemeinsam zur Deckung des Wärmebedarfes eines bekannten Verbrauches eingesetzt wurden. Dabei kann und wird die so erzeugte elektrische Leistung wieder zur Deckung des Wärmebedarfes eingesetzt.

Ein Nachteil dieses Systems besteht darin, daß die erzeugte Elektroenergie in das Verbundsystem für Elektroenergie eingespeist und an anderer Stelle zum Zwecke der elektrischen Heizung wieder entnommen werden sollte.

Ein zweiter Nachteil des bekannten Systems stellt sich dadurch dar, daß eine Regelung abweichender Verbräuche in der DD-WP 110 104 nicht realisiert wurde. Die Elektroenergieerzeugung bildet sich automatisch als feststehende proportionale Größe zur Fernwärmeerzeugung. Abweichungen des Verbrauches von dieser feststehenden Größe können lediglich mit Plus- und Minusbetrag aus dem elektrischen Verbundnetz gedeckt werden.

Die Aufgabe vorliegender Erfindung besteht darin, ein Verfahren zu entwickeln, welches es durch eine systemimanente Regelung ermöglicht, eine autarke Funktionsfähigkeit des Systems zu erreichen.

Im Folgenden soll die Erfindung in ihren theoretischen Grundlagen näher beschrieben werden. In einem Heizwerk mit Dampferzeugern werden eine oder mehrere Gegendruckturbinen oder Entnahme-Gegendruckturbinen so installiert, daß der Koppelfaktor einen Wert 1,0 erreicht. Damit wird die Gegendruckturbine mit den niedrigen Benutzungsstunden der maximalen Wärmeleistung belastet.

Um eine hohe elektrische Leistung zu erreichen, können höhere Dampfparameter, als gewöhnlich in Heizwerken üblich, angestrebt werden. Die Entnahme- und Abdampfparameter der Turbine sind, abhängig von den erforderlichen Vorlaufparametern des Wärmeträgers im Fernwärmenetz, möglichst niedrig zu wählen.

Der Einsatz von Entnahme-Gegendruckturbinen bringt hinsichtlich der möglichen elektrischen Leistungserzeugung Vorteile.

Durch die Auslegung des Heizwerkes mit Gegendruckturbinen, insbesondere durch den in der Regel anzuwendenden Koppelfaktor 1,0 wird eine der Belastungscharakeristik des Wärmeleistungsbedarfes proportionale elektrische Leistung erzeugt. Dadurch eignet sich die so erzeugte elektrische Leistung wieder zur Deckung eines Wärmebedarfes mit etwa gleicher Bedarfscharakteristik.

Die elektrische Leistung kann ohne Blockumspanner direkt mit der Generatorspannung in das elektrisch zu beheizende Teilgebiet transportiert werden.

Der maximale Wärmeleistungsbedarf dieses oder mehrerer kleiner Teilgebiete entspricht der im Heizwerk mit Gegendruckturbinen erzeugbaren elektrischen Leistung.

In diesen Teilgebieten wird der Einsatz der elektrischen Direktbeheizung möglich.

Für das Gesamtsystem gilt:

$$P_G = P_E + P_W$$

wobei

| | | |
|---|---|---|
| $P_G$ = | Gesamtleistung | |
| $P_E$ = | Elektrische Leistung des Systems | |
| $P_W$ = | Wärmeleistung des Systems | |
| $P_G$ = | $D(i_1 - i_2) \cdot \eta + D(i_2 - i_3) \cdot \eta$ | |
| $D$ = | Dampferzeugung | |
| $i_1$ = | Wärmeinhalt Dampf am Turbineneintritt | |
| $i_2$ = | Wärmeinhalt Dampf am Turbinenaustritt = Wärmeinhalt Dampf am Fernwärmeeintritt | |
| $i_3$ = | Wärmeinhalt Kondensat am Fernwärmeaustritt | |

es gilt weiter:

| | |
|---|---|
| $i$ = | $f(p, t)$ |
| $p$ = | Dampfdruck |
| $t$ = | Dampftemperatur |

Aus diesem ergibt sich bei Koppelfaktor 1 für das System:

- Gesamtleistung des Systems ist proportional D und mit D regelbar
- das Verhältnis der Erzeugung von Wärme/Fernwärme zu Elektroenergie ist insbesondere mit $i_1$ und $i_2$ veränderbar, also mit Dampfdruck und Dampftemperatur regelbar.

Gelöst wird demgemäß die vorgenannte Aufgabenstellung dadurch, daß die Regelung der Proportionen der Erzeugung zwischen Wärme und Elektroenergie bei Beibehaltung des Koppelfaktors 1 insbesondere durch Veränderungen der Ein- und/oder Austrittsparameter des Dampfes an der Gegendruckturbine bei gleichbleibendem Mengenstrom erfolgt.

Veränderungen der Gesamtleistung bei Beibehaltung der Verhältnisse der Erzeugung beider Energieträger werden dagegen mit der Dampfmenge geregelt. In weiterer Ausbildung der Erfindung ist es auch möglich, die Regelung beider Energieträger durch Einbeziehung von Wärmespeichern in das Verfahren zu lösen.

Die in diesem System erzeugte Elektroenergie läßt sich vorzugsweise über ein gesondertes Heizstromnetz den Verbrauchern, zuführen und kann so ausschließlich für Heiz- bzw. Klimatisierungszwecke eingesetzt werden.

Selbstverständlich könnten auch zur Energieübertragung bei Beibehaltung des autarken Systems vorhandene Netze genutzt werden.

Im weiteren ist es durchaus möglich, vor- oder nachgelagerte Prozesse, wie beispielsweise den bekannten Gasturbinenprozeß in das Verfahren einzubeziehen.

**Patentansprüche**

1. Verfahren zur Wärmeversorgung, bei dem in einem Heizwerk neben der Heizdampf- und/oder Heizwasserversorgung durch Einsatz einer oder mehrerer Gegendruck- oder Entnahme-Gegendruckturbinen mit Generator mit Koppelfaktor 1 eine proportionale Elektroenergie erzeugt wird, dadurch gekennzeichnet, daß die Regelung der Proportionen der Erzeugung zwischen Wärme und Elektroenergie bei Beibehaltung des Koppelfaktors 1 insbesondere durch Veränderung der Ein- und-oder Austrittsparameter des Dampfes an der Gegendruckturbine bei gleichbleibendem Mengenstrom erfolgt, und Veränderungen der Größenordnung des Verbrauches der Energieträger Wärme und Elektroenergie wie auch insbesondere Veränderungen der Proportionen des Verbrauches zwischen diesen Energieträgern im System selbst ausgeregelt werden und das Wärmeversorgungssystem autark ist.

2. Verfahren zur Wärmeversorgung gemäß Anspruch 1, dadurch gekennzeichnet, daß die in der Erzeugeranlage parallel zur Fernwärme erzeugte Elektroenergie über ein separates Heizstromverteilernetz zum Abnehmer transportiert wird.

3. Verfahren zur Wärmeversorgung gemäß Anspruch 1, dadurch gekennzeichnet, daß die übertragung der erzeugten Elektroenergie über andere Netze zum Verbraucher erfolgt.

4. Verfahren zur Wärmeversorgung nach Anspruch 1, dadurch gekennzeichnet, daß die Regelung der Proportionen der Energieträger durch Einsatz von Wärmespeichern erfolgt.

Europäisches
Patentamt

# EUROPÄISCHER RECHERCHENBERICHT

Nummer der Anmeldung

EP    92 10 6337

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A, D | DD-A-110 104 (RASCHE)<br>* das ganze Dokument *<br>--- | 1 | F01K17/02<br>F01K7/34 |
| A | DE-C-289 044 (VEREINIGTE DAMPFTURBINEN-GES.)<br>* das ganze Dokument *<br>--- | 1 | |
| A | DE-A-2 605 527 (KRAFTANLAGEN)<br>* Seite 1, Zeile 1 - Zeile 6; Abbildungen *<br>--- | 1,4 | |
| A | EP-A-0 099 501 (BROWN,BOVERI)<br>* Seite 12, Zeile 9 - Seite 16, Zeile 11; Abbildungen *<br>--- | 1,4 | |
| A | GB-A-733 657 (GENERAL ELECTRIC)<br>* Seite 2, Zeile 72 - Zeile 88 *<br>* Seite 5, Zeile 24 - Seite 6, Zeile 30; Abbildungen *<br>--- | 1 | |
| A | G.KLEFENZ 'DIE REGELUNG VON DAMPFKRAFTWERKEN' 1983 , BIBLIOGRAFISCHES INSTITUT , DE,MANNHEIM<br>* Seite 193 - Seite 197 *<br>----- | | |

**RECHERCHIERTE SACHGEBIETE (Int. Cl.5 )**

F01K

Der vorliegende Recherchenbericht wurde für alle Patentansprüche erstellt

| Recherchenort | Abschlußdatum der Recherche | Prüfer |
|---|---|---|
| DEN HAAG | 29 JULI 1992 | VAN GHEEL J.U.M. |